(19) Europäisches Patentamt
European Patent Office
Office européen des brevets

(11) **EP 4 095 498 A1**

(12) **EUROPÄISCHE PATENTANMELDUNG**

(43) Veröffentlichungstag:
**30.11.2022   Patentblatt 2022/48**

(21) Anmeldenummer: **21176531.8**

(22) Anmeldetag: **28.05.2021**

(51) Internationale Patentklassifikation (IPC):
**G01K 7/18** (2006.01)          **G01K 15/00** (2006.01)
**H02P 29/64** (2016.01)

(52) Gemeinsame Patentklassifikation (CPC):
**G01K 7/18; G01K 15/005; H02P 29/664**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **MELECS EWS GmbH**
**7011 Siegendorf (AT)**

(72) Erfinder:
• **NEUMANN, Philipp**
**3231 St. Margarethen an der Sierning (AT)**
• **GEMEINER, Christian**
**2384 Breitenfurt (AT)**

(74) Vertreter: **Maier, Daniel Oliver**
**Siemens AG**
**Postfach 22 16 34**
**80506 München (DE)**

(54) **VERFAHREN ZUR TEMPERATURBESTIMMUNG IN EINEM ELEKTRONISCHEN STEUERGERÄT EINES KRAFTFAHRZEUGES**

(57)     Die Erfindung betrifft ein Verfahren zur Temperaturbestimmung in einem elektronischen Steuergerät eines Kraftfahrzeuges, wobei das Steuergerät zumindest eine elektrische Wicklung (6) umfasst, dadurch gekennzeichnet, dass in einem definierten Betriebszustand der elektrische Widerstand (7) der Wicklung (6) bestimmt und daraus die Temperatur ermittelt wird.

FIG 1

**Beschreibung**

**Technisches Gebiet**

Die vorliegende Erfindung betrifft ein Verfahren zur Temperaturbestimmung in einem elektronischen Steuergerät eines Kraftfahrzeuges.

**Stand der Technik**

Im Automobilbereich werden heute in Kraftfahrzeugen hoch entwickelte elektronische Steuergeräte zur Kontrolle vielfältiger Funktionen wie z.B. zur Steuerung eines Getriebes und/oder einer Kupplung eingesetzt. Dazu werden Signale mehrerer Sensoren erfasst, verarbeitet und über Elektromotore und Aktuatoren in eine lineare bzw. geradlinige Bewegung eines Kraftfahrzeugbauteils umgewandelt.

Ein beispielhaftes Einsatzgebiet stellt die automatische Betätigung einer Anfahr- und Schaltkupplung eines Kraftfahrzeuges dar, wobei das zu betätigende Bauteil beispielsweise ein so genannter Zentralausrücker der Reibkupplung sein kann. Ein derartiger Zentralausrücker wirkt bei einer Betätigung beispielsweise derart auf die Membranfeder der Kupplung, dass diese ausgerückt oder in eine Schlupfstellung gebracht wird, in der diese kein beziehungsweise nur ein reduziertes Drehmoment vom dem Antriebsmotor des Fahrzeugs zu dem Getriebe weiterleiten kann.

Bei Kupplungen oder Getrieben von Kraftfahrzeugen ist es üblich, die Temperatur laufend zu überwachen, um so Fehler frühzeitig zu erkennen und Schäden an den Bauteilen durch überhöhte Temperaturen zu vermeiden.

Eine derartige Überwachung wird üblicherweise mit Hilfe von Temperatursensoren durchgeführt.

Der Temperatursensor ist dabei meist an einer relevanten oder geeigneten Stelle angebracht und übermittelt die gemessenen Temperaturen beispielsweise an ein entsprechendes Steuergerät. Üblicherweise wird für die Temperaturmessung von Kupplung oder Getriebe ein Temperatursensor an das Getriebe oder die Kupplung montiert. Die elektrischen Signale des Temperatursensors werden dann z.B. über eine Steckverbindung an das entsprechende Steuergerät weitergeleitet.

Der Nachteil eines derart montierten Temperatursensors liegt darin, dass sein Einbau relativ aufwendig und teuer ist, und dass es aufgrund der Steckverbindungen immer wieder zu Störungen kommen kann.

Aus der Schrift DE 198 23 685 A1 ist ein Steuergerät für ein automatisches Kraftfahrzeug-Getriebe mit einem Gehäuse bekannt, bei welchem eine Bodenplatte des Gehäuses flächig und thermisch leitend mit einem zu überwachenden Aggregat verbunden ist. Auf der Bodenplatte ist mittels eines thermisch leitenden Klebers eine Temperaturmesseinheit bestehend aus einem Schaltträger und Widerstandsbahnen mit temperaturabhängiger Leitfähigkeit angebracht. Der Nachteil bei der in der Schrift DE 198 23 685 A1 offenbarten Temperaturmessung liegt - neben einem aufwendigen und wenig platzsparenden Einbau - insbesondere in der flächigen Anbringung der Bodenplatte des Gehäuses auf dem zu überwachenden Aggregat. Dadurch wird nicht nur die Temperaturmesseinheit, sondern auch das Steuergerät erwärmt, wodurch es zu Störungen und Schäden z.B. bei Bauelementen des Steuergeräts kommen kann.

**Darstellung der Erfindung**

Der Erfindung liegt daher die Aufgabe zugrunde, ein Verfahren zur Temperaturbestimmung anzugeben, mittels welchem auf einfache, platzsparende und kostengünstige Weise eine Temperaturmessung, insbesondere von Getriebe oder Kupplung, mit geringer Störanfälligkeit durchführbar ist.

Die Lösung dieser Aufgabe erfolgt durch ein Verfahren der eingangs genannten Art, bei dem in einem definierten Betriebszustand der elektrische Widerstand der Wicklung bestimmt und daraus die Temperatur ermittelt wird Mit dem Verfahren kann der fehleranfällige und aufwändige Einsatz von Temperatursensoren vermieden werden.

Vorteilhaft ist es, wenn der elektrische Widerstand der Wicklung durch Anlegen eines elektrischen Impulses mit konstanter Stromamplitude und Messung der Spannung an der Wicklung oder durch Anlegen eines elektrischen Impulses mit konstanter Spannungsamplitude und Messung des Stroms in der Wicklung ermittelt wird.

Die Temperatur der Wicklung kann auf einfache Weise aus dem Widerstand ermittelt werden, indem der Temperaturkoeffizient des spezifischen Widerstands des Werkstoffes der Wicklung herangezogen wird.

Die Genauigkeit des Verfahrens kann in vorteilhafter Weise erhöht werden, wenn in einem Ruhezustand des elektrischen Gerätes, in dem die Innentemperatur des Gerätes der Umgebungstemperatur entspricht, die Umgebungstemperatur er-mittelt wird und mit dieser bekannten Temperatur ein Kalibriervorgang der Temperaturbestimmung vorgenommen wird.

Bei einer vorteilhaften Ausgestaltung ist die Wicklung Teil eines Elektromotors.

Die Erfindung wird anhand von Figuren näher erläutert. Es zeigen:

Fig. 1 ein Beispiel eines Steuergerätes für ein Kraftfahrzeug

Fig. 2 eine beispielhafte Temperatur-Widerstands-Kennlinie

Fig. 3 ein Beispiel eines typischen Messaufbaues für den Fall eines bürstenlosen Gleichstrommotors mit Dreiecksverschaltung.

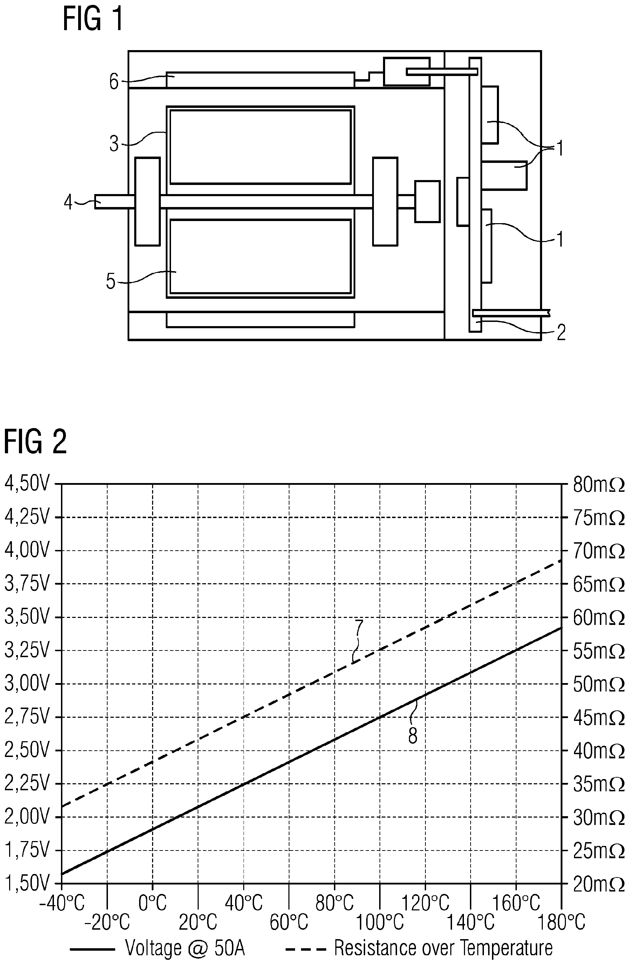

Das beispielhafte Steuergerät gemäß Figur 1 umfasst eine elektronische Schaltung 1 auf einer Leiterplatte 2, einen Elektromotor 3 mit Welle 4, wobei die Welle mit einem nicht dargestellten Aktuator zur Umsetzung der Drehbewegung in eine Linearbewegung verbunden ist.

Der Elektromotor 3 ist vorzugsweise als bürstenloser Gleichstrommotor (Brushless DC Motor, BLDC-Motor) mit Drehstromwicklung und Erregung durch Permanentmagnete 5 ausgeführt, die als Servomotoren besonders geeignet sind.

Die Permanentmagnete 5 sind oftmals die thermisch empfindlichsten Elemente der Anordnung, ihre maximale Einsatztemperatur, d.h. die Curietemperatur, beträgt bei hartmagnetischen Ferriten zwischen 100 und 460° Celsius.

Um eine Entmagnetisierung zu verhindern, müssen daher die Temperatur im Gerät überwacht und gegebenenfalls rechtzeitig Gegenmaßnahmen ergriffen werden.

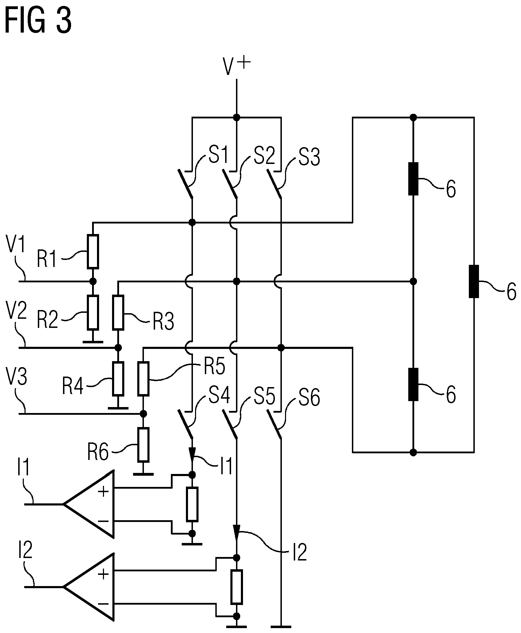

Erfindungsgemäß wird daher beim Ausführungsbeispiel in einer Stillstandphase des Elektromotors der elektrische Widerstand 7 einer Wicklung 6 des Elektromotors bestimmt. Dies ergibt einen sehr einfachen Messaufbau wie er in Fig. 3 dargestellt ist.

Es kann aber unter Umständen auch vorteilhaft sein, den Widerstand während der Bewegung des Elektromotors 3 in einem quasistationären Zustand zu bestimmen und daraus die Temperatur zu ermitteln.

Diese Temperatur entspricht in guter Näherung auch der Temperatur der Umgebung im Motor und damit auch der Permanentmagnete.

Dazu wird durch die elektronische Schaltung 1 der ausgewählten Wicklung 6 ein definierter Stromimpuls aufgebracht, d.h. ein elektrischer Impuls mit konstanter Stromamplitude und einer Dauer, die etwa dem Doppelten der durch die Induktivität der Wicklung 6 bestimmten Impulsantwort entspricht.

Damit wird am Ende des Impulses einerseits eine stabile Ausgangsspannung erhalten, andererseits ist die Zeit zu kurz, als dass durch den Strom in der Wicklung eine nennenswerte Eigenerwärmung erfolgt.

Es kann weiterhin vorteilhaft sein, eine möglichst hohe Stromamplitude vorzusehen, um so Ungenauigkeiten von Stromverstärkern der elektronischen Steuerung gering zu halten und damit die Genauigkeit der Temperaturbestimmung zu erhöhen.

Durch Messung der Motorspannung kann bei Kenntnis der Stromamplitude in bekannter Weise der aktuelle Widerstand der Motorwicklung 6 gemäß R = U/I ermittelt werden.

Die Spannung kann entweder direkt am Motor gemessen werden oder alternativ über die sehr genaue Messung der Eingangsspannung am Steuergerät geteilt durch die aktuelle Pulsweitenmodulation der Endstufe.

Wie in Figur 3 schematisch dargestellt, werden dazu bei einem bürstenlosen Gleichstrommotor (BLDC-Motor) mit Dreieckschaltung der Wicklungen 6, der durch Schalter S1... S6 angesteuert wird, die Wicklungsspannungen V1, V2, V3 über hochohmige Spannungsteiler R1/R2, R3/R4 und R5/R6 gemessen, und die Ströme I1, I2 durch zwei Wicklungen 6 über Stromshunts gemessen, der Strom durch den dritte Wicklung ergibt sich daraus gemäß der Kirchhoffschen Regel I3= I1+I2. Aus diesen Werten kann der aktuelle Widerstand der Wicklungen 6 und daraus wiederum die Temperatur bestimmt werden.

Mit dem spezifischen Temperaturkoeffizienten $\alpha$ des Wicklungsmaterials, beim Ausführungsbeispiel Kupfer ($\alpha$ = 0,00393 pro K), und dem Wickelwiderstand des Motors (42,2 m$\Omega$ +/- 7%) bei 23,5°C kann gemäß

$$\Delta R = \alpha \times \Delta T \times R_k$$

$$R_w = R_k + \Delta R$$

nun die aktuelle Temperatur bestimmt werden.

Zur weiteren Erhöhung der Genauigkeit der Temperaturbestimmung kann in einem Ruhezustand des elektrischen Gerätes, in dem die Innentemperatur des Gerätes der Umgebungstemperatur entspricht, die Umgebungstemperatur ermittelt und mit dieser bekannten Temperatur ein Kalibriervorgang der Temperaturbestimmung vorgenommen werden.

Dies kann beispielsweise bei einem Kraftfahrzeug in einer Werkshalle sowohl während der Montage des Fahrzeuges oder nach längerem Stillstand beispielsweise während eines Wartungsvorganges erfolgen.

Wenn die Temperatur in dieser Werkshalle beispielsweise 23,5°C hat, dann muss auch das Ergebnis der Temperaturbestimmung diesen Wert aufweisen.

Es kann auch vorteilhaft sein, den Kalibriervorgang bereits bei der Montage des Steuergerätes vor dem Einbau in das Fahrzeug vorzunehmen.

Wenn das Fahrzeug Mittel zur Messung der Umgebungstemperatur aufweist, dann kann es zweckmäßig sein, diese Information zur Kalibrierung der Temperaturbestimmung im elektrischen Gerät heranzuziehen und den Kalibriervorgang regelmäßig selbsttätig nach längerem Stillstand auch im Freien durchzuführen.

Mit dieser Kalibrierung werden sämtliche Initialfehler der Temperaturbestimmung beseitigt und - bei regelmäßiger Durchführung - darüber hinaus auch alterungsbedingte Änderungen erfasst.

Zur weiteren Veranschaulichung des erfindungsgemäßen Verfahrens zeigt Figur 2 beispielhaft die Abhängigkeit von Wicklungswiderstand 7 und Motorspannung 8 von der Temperatur.

Bezugszeichenliste

| | |
|---|---|
| 1 | elektronische Schaltung |
| 2 | Leiterplatte |
| 3 | Elektromotor |
| 4 | Welle |
| 5 | Permanentmagnet |
| 6 | Wicklung |
| 7 | Wicklungswiderstand |
| 8 | Motorspannung |
| S1... S6 | Schalter |
| V1, V2, V3 | Wicklungsspannungen |
| R1/R2, R3/R4, R5/R6 | Spannungsteiler |

**Patentansprüche**

1.   Verfahren zur Temperaturbestimmung in einem elektronischen Steuergerät eines Kraftfahrzeuges, wobei das Steuergerät zumindest eine elektrische Wicklung (6) umfasst, **dadurch gekennzeichnet, dass** in einem definierten Betriebszustand der elektrische Widerstand (7) der Wicklung (6) bestimmt und daraus die Temperatur ermittelt wird.

2.   Verfahren nach Anspruch 1, **dadurch gekennzeichnet, dass** der elektrische Widerstand (7) der Wicklung (6) durch Anlegen eines elektrischen Impulses mit konstanter Stromamplitude und Messung der Spannung (8) an der Wicklung (6) ermittelt wird.

3.   Verfahren nach Anspruch 1, **dadurch gekennzeichnet, dass** der elektrische Widerstand (7) der Wicklung (6) durch Anlegen eines elektrischen Impulses mit konstanter Spannungsamplitude und Messung des Stroms in der Wicklung (6) ermittelt wird.

4.   Verfahren nach einem der Ansprüche 1 bis 3, **dadurch gekennzeichnet, dass** zur Ermittlung der Temperatur der Wicklung (6) der Temperaturkoeffizient des spezifischen Widerstands des Werkstoffes der Wicklung herangezogen wird.

5.   Verfahren nach einem der Ansprüche 1 bis 4, **dadurch gekennzeichnet, dass** in einem Ruhezustand des elektrischen Gerätes, in dem die Innentemperatur des Gerätes der Umgebungstemperatur entspricht, die Umgebungstemperaturtemperatur ermittelt wird und mit dieser bekannten Temperatur ein Kalibriervorgang der Temperaturbestimmung vorgenommen wird.

6.   Verfahren nach einem der Ansprüche 1 bis 5, **dadurch gekennzeichnet, dass** eine Wicklung (6) eines Elektromotors (3) zur Temperaturbestimmung herangezogen wird.

## FIG 1

## FIG 2

Voltage @ 50A — — — Resistance over Temperature

# FIG 3

Europäisches
Patentamt

European
Patent Office

Office européen
des brevets

# EUROPÄISCHER RECHERCHENBERICHT

Nummer der Anmeldung

EP 21 17 6531

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2015 112920 A1 (GETRAG GETRIEBE- UND ZAHNRADFABRIK HERMANN HAGENMEYER GMBH & CIE KG [D] 9. Februar 2017 (2017-02-09) * Absätze [0001], [0003], [0009] - [0017], [0023], [0031], [0047], [0060], [0061], [0063] - [0066]; Abbildung 1a * ----- | 1-6 | INV. G01K7/18 G01K15/00 H02P29/64 |
| X | EP 0 284 711 A2 (HEIDELBERGER DRUCKMASCH AG [DE]) 5. Oktober 1988 (1988-10-05) * Spalte 1, Zeilen 1-5,25-31; Abbildung 5 * * Spalte 2, Zeile 36 - Spalte 3, Zeile 1 * * Spalte 4, Zeilen 1-8 * * Spalte 4, Zeile 47 - Spalte 5, Zeile 7 * ----- | 1-6 | |
| X | DE 10 2015 212135 B3 (CONTINENTAL AUTOMOTIVE GMBH [DE]) 21. Juli 2016 (2016-07-21) * Absätze [0001], [0009], [0011], [0020], [0031], [0036] - [0040], [0051], [0052]; Abbildung 1 * ----- | 1-6 | |
| X | DE 10 2013 213462 A1 (BOSCH GMBH ROBERT [DE]) 15. Januar 2015 (2015-01-15) * Absätze [0001], [0008], [0011], [0018], [0019], [0025], [0039] - [0042] * ----- | 1,4-6 | RECHERCHIERTE SACHGEBIETE (IPC) G01K H02P |

Der vorliegende Recherchenbericht wurde für alle Patentansprüche erstellt

| Recherchenort | Abschlußdatum der Recherche | Prüfer |
|---|---|---|
| Den Haag | 3. November 2021 | Phleps, Stefanie |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.......................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 21 17 6531

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-11-2021

| Im Recherchenbericht angeführtes Patentdokument | Datum der Veröffentlichung | Mitglied(er) der Patentfamilie | Datum der Veröffentlichung |
|---|---|---|---|
| DE 102015112920 A1 | 09-02-2017 | DE 102015112920 A1<br>EP 3332156 A1<br>US 2018238441 A1<br>WO 2017021366 A1 | 09-02-2017<br>13-06-2018<br>23-08-2018<br>09-02-2017 |
| EP 0284711 A2 | 05-10-1988 | DE 3706659 A1<br>EP 0284711 A2<br>JP H0685626 B2<br>JP S63234858 A<br>US 4897584 A | 15-09-1988<br>05-10-1988<br>26-10-1994<br>30-09-1988<br>30-01-1990 |
| DE 102015212135 B3 | 21-07-2016 | CN 108112262 A<br>DE 102015212135 B3<br>KR 20170134611 A<br>US 2018180010 A1<br>WO 2017001077 A1 | 01-06-2018<br>21-07-2016<br>06-12-2017<br>28-06-2018<br>05-01-2017 |
| DE 102013213462 A1 | 15-01-2015 | DE 102013213462 A1<br>FR 3008489 A1 | 15-01-2015<br>16-01-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19823685 A1